# EUROPEAN PATENT SPECIFICATION

(11) **EP 4 571 998 B1**
(45) Date of publication and mention of the grant of the patent: **02.12.2026**
(21) Application number: 24823784.4
(22) Date of filing: 12.06.2024
(51) Int. Cl.: H01M 50/591, H01M 50/588, H01M 50/519, H01M 50/502, H01M 50/211

(54) **BATTERY CELL ASSEMBLY**
BATTERIEZELLENANORDNUNG
ENSEMBLE ÉLÉMENT DE BATTERIE

(30) Priority: 15.06.2023 KR 20230076999
(43) Date of publication of application: 18.06.2025
(73) Proprietor: LG Energy Solution, Ltd., Seoul 07335 (KR)
(72) Inventor: JEON, Jong Pil, Daejeon 34122 (KR); SHIN, Ju Hwan, Daejeon 34122 (KR); KIM, Min Bum, Daejeon 34122 (KR)
(74) Representative: Plasseraud IP
(86) International application number: PCT/KR2024/095878
(87) International publication number: WO 2024/258268

(56) References cited:
- EP-A1- 4 148 861
- KR-A- 20130 113 975
- KR-A- 20160 129 820
- KR-A- 20160 129 820
- KR-A- 20170 066 896
- KR-A- 20200 080 077
- US-A1- 2022 131 237

## Description

### [Technical Field]

The present invention relates to a battery cell assembly. The present application claims the benefit of priority based on Korean Patent Application No. 10-2023-0076999, filed on June 15, 2023.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

Cell manufacturers are paying huge capital expenditures to meet the growth of steep demand for secondary batteries for mobility. Companies are increasing productivity per line to maximize the return on invested capital, and to this end, various researches are continuously being conducted to improve yield and productivity. EP 4 148 861 A1 relates to a battery assembly including a cell stack in which a plurality of battery cells are stacked, and a battery pack having the same. KR 2016 0129820 A relates to a battery pack.

### [Disclosure]

### [Technical Problem]

The present invention is directed to providing a battery cell assembly with improved productivity.

### [Technical Solution]

The invention is defined by independent claim 1. Further embodiments of the invention are defined by the dependent claims. Example embodiments of the present invention provide a battery cell assembly. The battery cell assembly includes: a cell stack including a plurality of first pouch type battery cells and a plurality of second pouch type battery cells, wherein each of the plurality of first pouch type battery cells includes a first positive electrode lead and a first negative electrode lead, and each of the plurality of second pouch type battery cells includes a second positive electrode lead and a second negative electrode lead; a first bus bar frame coupled to the cell stack; a first integrated circuit on the first bus bar frame; a second bus bar frame coupled to the cell stack; a second integrated circuit on the second bus bar frame; and a lead cover assembly coupled to the first bus bar frame, in which the lead cover assembly includes a lead cover frame coupled to the first bus bar frame and a third integrated circuit on the lead cover frame.

The first integrated circuit may be configured to sense a potential of the first positive electrode lead of each of the plurality of first pouch type battery cells and a potential of the second negative electrode lead of each of the plurality of second pouch type battery cells.

The first integrated circuit may include a plurality of first sensing plates shorted with the first positive electrode lead of each of the plurality of first pouch type battery cells and the second negative electrode lead of each of the plurality of second pouch type battery cells.

The second integrated circuit may be configured to sense a potential of the first negative electrode lead of each of the plurality of first pouch type battery cells and a potential of the second positive electrode lead of each of the plurality of second pouch type battery cells.

The second integrated circuit may include a plurality of second sensing plates shorted with the first negative electrode lead of each of the plurality of first pouch type battery cells and the second positive electrode lead of each of the plurality of second pouch type battery cells.

The third integrated circuit may include a cell management controller (CMC).

The lead cover assembly may include an integrated circuit cover coupled to the lead cover frame coupled to the first bus bar frame and configured to cover the third integrated circuit.

The battery cell assembly may further include a first connection cable connected to each of the first integrated circuit and the third integrated circuit.

The lead cover frame may include a first slit, and the first connection cable may be connected to the third integrated circuit through the first slit.

The battery cell assembly may further include a second connection cable connected to each of the second integrated circuit and the third integrated circuit.

The lead cover frame may include a second slit, and the second connection cable may be connected to the third integrated circuit through the second slit.

The battery cell assembly may further include a first connection cable connected to each of the first integrated circuit and the second integrated circuit.

The battery cell assembly may further include a second connection cable connected to each of the first integrated circuit and the third integrated circuit.

### [Advantageous Effects]

A cell management controller (CMC) of a battery cell assembly according to example embodiments of the present invention may be mounted on a lead cover frame. Accordingly, damage to the CMC during welding of electrode leads can be prevented, and the yield and productivity of the battery cell assembly can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery cell assembly according to example embodiments.
FIG. 2 is an exploded perspective view of a battery cell assembly.
FIG. 3 is an enlarged partial perspective view of a part of FIG. 2.
FIG. 4 is an exploded perspective view of a battery cell assembly.
FIG. 5 is an enlarged partial perspective view of a part of FIG. 4.
FIG. 6 is an exploded perspective view of a lead cover assembly.
FIG. 7 is a plan view of a cell stack.
FIG. 8 is a perspective view of a battery cell assembly according to example embodiments.
FIG. 9 is an exploded perspective view of a battery cell assembly.
FIG. 10 is an enlarged partial perspective view of a part of FIG. 9.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

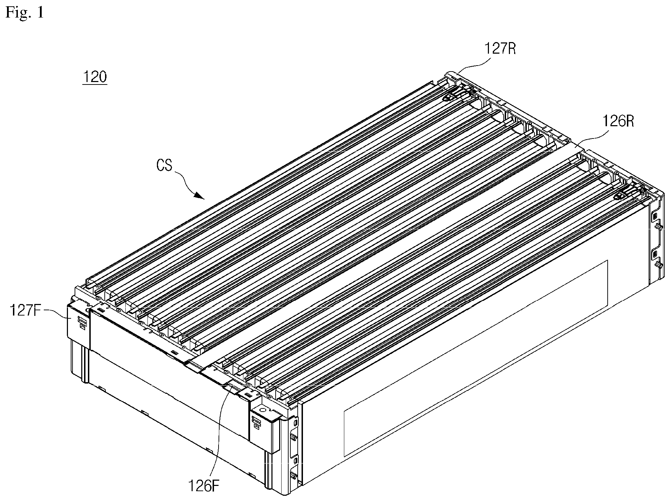

FIG. 1 is a perspective view of a battery cell assembly 120 according to example embodiments.

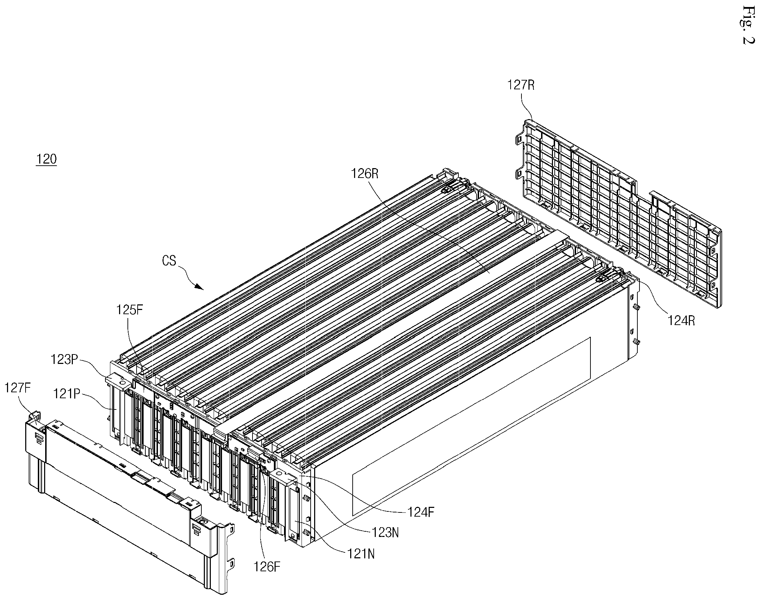

FIG. 2 is an exploded perspective view of the battery cell assembly 120.

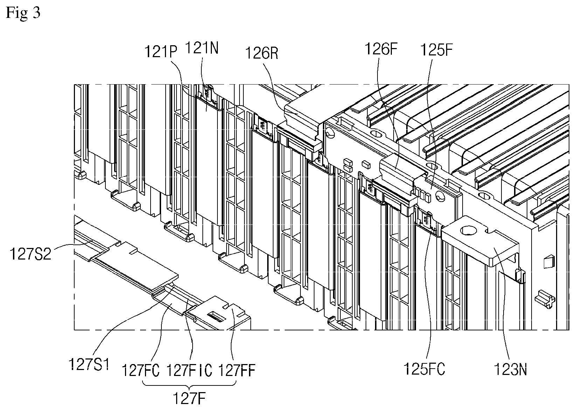

FIG. 3 is an enlarged partial perspective view of a part of FIG. 2.

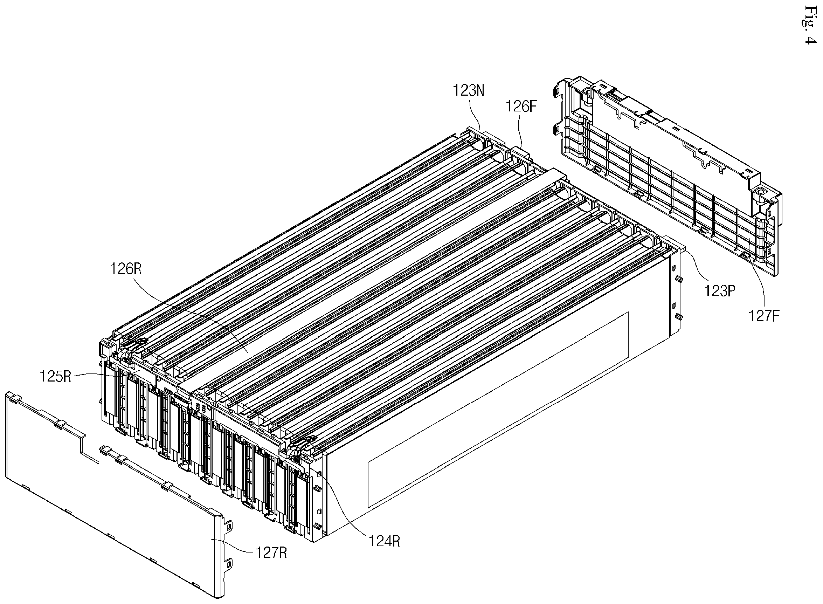

FIG. 4 is an exploded perspective view of the battery cell assembly 120.

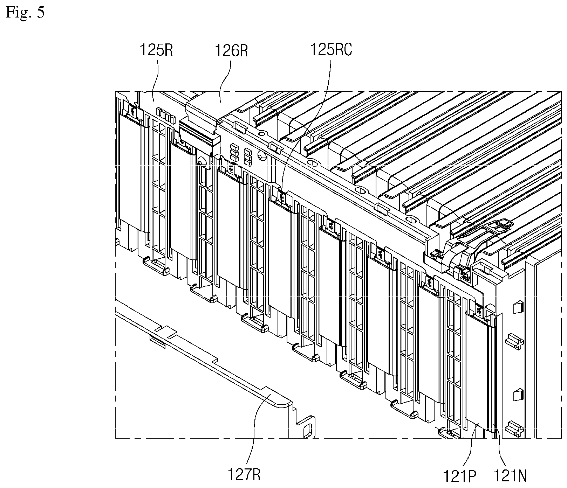

FIG. 5 is an enlarged partial perspective view of a part of FIG. 4.

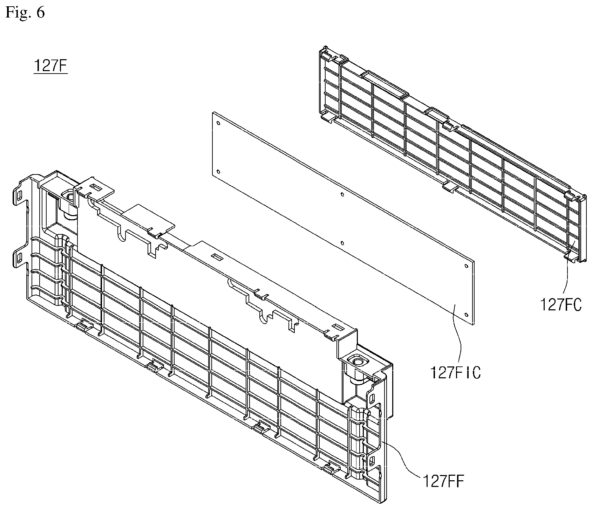

FIG. 6 is an exploded perspective view of a lead cover assembly.

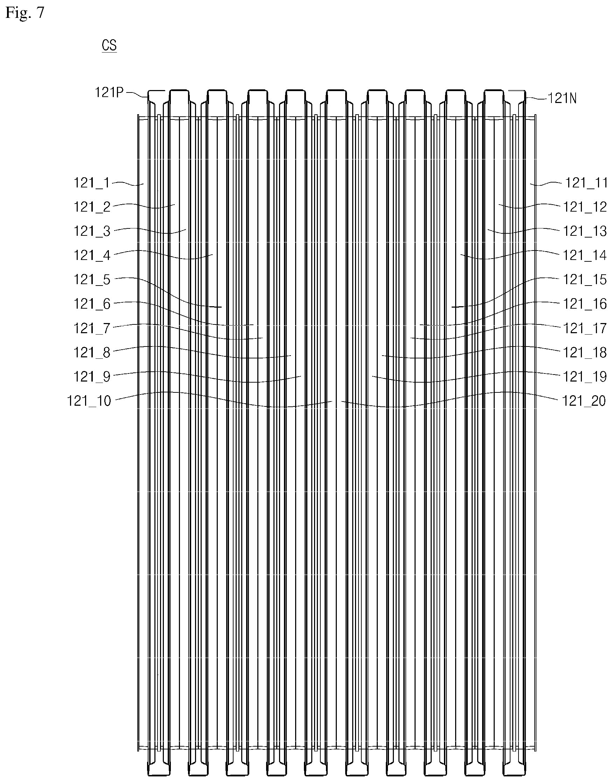

FIG. 7 is a plan view of a cell stack.

Referring to FIGS. 1 to 7, the battery cell assembly 120 may include a cell stack CS, first and second bus bars 123P and 123N, a first bus bar frame 124F, a second bus bar frame 124R, a first integrated circuit 125F, a second integrated circuit 125R, a first connection cable 126F, a second connection cable 126R, a lead cover assembly 127F, and a lead cover 127R.

According to example embodiments, the cell stack CS may include a plurality of pouch type battery cells 121_1, 121_2, 121_3, 121_4, 121_5, 121_6, 121_7, 121_8, 121_9, 121_10, 121_11, 121_12, 121_13, 121_14, 121_15, 121_16, 121_17, 121_18, 121_19, and 121_20 (hereinafter, 121_1 to 121_20), and a plurality of separators 122.

Each of the plurality of pouch type battery cells 121_1 to 121_20 may include a positive electrode lead 121P, a negative electrode lead 121N, an electrode assembly, and a pouch case. The pouch case may cover the electrode assembly. The electrode assembly may be included in a pouch case. The electrode assembly may include a positive electrode, a negative electrode, and a separator between the positive electrode and the negative electrode.

The electrode assembly may be a jelly-roll type electrode assembly or a stack type electrode assembly according to a form of assembly. The jelly-roll type electrode assembly may include a structure in which a positive electrode, a negative electrode, and a separator interposed therebetween are wound together. The stack type electrode assembly may include a plurality of positive electrodes, a plurality of negative electrodes, and a plurality of separators interposed therebetween that are stacked sequentially.

The positive electrode lead 121P may be connected to positive electrodes of the electrode assembly. The negative electrode lead 121N may be connected to negative electrodes of the electrode assembly. The positive electrode lead 121P and the negative electrode lead 121N may protrude from the pouch case to the outside. Each of the plurality of pouch type battery cells 121_1 to 121_20 may be a bidirectional cell. The positive electrode lead 121P and the negative electrode lead 121N may protrude in opposite directions from the pouch case of each of the plurality of pouch type battery cells 121_1 to 121_20.

The pouch case may include a storage part and a terrace. The storage part may provide a storage space for storing the electrode assembly. The storage space may be provided by a forming process. The storage part may have a convex shape with respect to the terrace. The terrace may include a sealed portion. The terrace may surround the storage part.

According to example embodiments, the plurality of pouch type battery cells 121_1 to 121_20 is stacked in one direction. The direction in which the plurality of pouch type battery cells 121_1 to 121_20 are stacked may be substantially perpendicular to a direction in which the positive electrode lead 121P and the negative electrode lead 121N are spaced apart from each other.

According to example embodiments, each of the odd-numbered pouch type battery cells 121_1, 121_3, 121_5, 121_7, 121_9, 121_11, 121_13, 121_15, 121_17, and 121_19 may be referred to as a first pouch type battery cell. The pouch case, the positive electrode lead 121P, and the negative electrode lead 121N of each of the odd-numbered pouch type battery cells 121_1, 121_3, 121_5, 121_7, 121_9, 121_11, 121_13, 121_15, 121_17, and 121_19 may be referred to as a first pouch case, a first positive electrode lead, and a first negative electrode lead, respectively.

Each of the even-numbered pouch type battery cells 121_2, 121_4, 121_6, 121_8, 121_10, 121_12, 121_14, 121_16, 121_18, and 121_20 may be referred to as a second pouch type battery cell. The pouch case, the positive electrode lead 121P, and the negative electrode lead 121N of each of the even-numbered pouch type battery cells 121_2, 121_4, 121_6, 121_8, 121_10, 121_12, 121_14, 121_16, 121_18, and 121_20 may be referred to as a second pouch case, a second positive electrode lead, and a second negative electrode lead, respectively.

The negative electrode leads 121N of each of the plurality of pouch type battery cells 121_1 to 121_20 may be shorted from the positive electrode leads 121P of a following one of the plurality of pouch type battery cells 121_1 to 121_20.

According to example embodiments, the negative electrode lead 121N of the pouch type battery cell 121_1 may be coupled to the positive electrode lead 121P of the pouch type battery cell 121_2. According to example embodiments, the negative electrode lead 121N of the pouch type battery cell 121_1 may be welded to the positive electrode lead 121P of the pouch type battery cell 121_2. According to example embodiments, the negative electrode lead 121N of the pouch type battery cell 121_1 may be shorted with the positive electrode lead 121P of the pouch type battery cell 121_2.

According to example embodiments, the negative electrode lead 121N of the pouch type battery cell 121_2 may be coupled to the positive electrode lead 121P of the pouch type battery cell 121_3. According to example embodiments, the negative electrode lead 121N of the pouch type battery cell 121_2 may be welded to the positive electrode lead 121P of the pouch type battery cell 121_3. According to example embodiments, the negative electrode lead 121N of the pouch type battery cell 121_2 may be shorted with the positive electrode lead 121P of the pouch type battery cell 121_3.

According to example embodiments, the negative electrode lead 121N of the pouch type battery cell 121_3 may be coupled to the positive electrode lead 121P of the pouch type battery cell 121_4. According to example embodiments, the negative electrode lead 121N of the pouch type battery cell 121_3 may be welded to the positive electrode lead 121P of the pouch type battery cell 121_4. According to example embodiments, the negative electrode lead 121N of the pouch type battery cell 121_3 may be shorted with the positive electrode lead 121P of the pouch type battery cell 121_4.

A connection relationship between the positive electrode lead 121P and the negative electrode lead 121N of each of the pouch type battery cells 121_4, 121_5, 121_6, 121_7, 121_8, 121_9, 121_10, 121_11, 121_12, 121_13, 121_14, 121_15, 121_16, 121_17, 121_18, 121_19 and 121_20 is substantially the same as those described above with respect to the pouch type battery cells 121_1, 121_2, 121_3, and 121_4, and thus a redundant description thereof is omitted here.

The plurality of separators 122 may horizontally support the plurality of pouch type battery cells 121_1 to 121_20 to prevent swelling of the plurality of pouch type battery cells 121_1 to 121_20. According to example embodiments, the plurality of separators 122 may be thermal barriers. According to example embodiments, each of the plurality of separators 122 may have a high melting temperature and a low thermal conductivity. According to example embodiments, each of the plurality of separators 122 may include a flame-retardant material such as ceramic and coated glass fiber. According to example embodiments, each of the plurality of separators 122 may be configured to emit a fire retarding material and a fire extinguishing agent when a thermal runaway event occurs.

Each of the first and second bus bar frames 124F and 124R is coupled to the cell stack CS. The first bus bar frame 124F may support the positive electrode lead 121P of each of the odd-numbered pouch type battery cells 121_1, 121_3, 121_5, 121_7, 121_9, 121_11, 121_13, 121_15, 121_17, and 121_19 and the negative electrode lead 121N of each of the even-numbered pouch type battery cells 121_2, 121_4, 121_6, 121_8, 121_10, 121_12, 121_14, 121_16, 121_18, and 121_20. The second bus bar frame 124R may support the negative electrode lead 121N of each of the odd-numbered pouch type battery cells 121_1, 121_3, 121_5, 121_7, 121_9, 121_11, 121_13, 121_15, 121_17, and 121_19 and the positive electrode lead 121P of each of the even-numbered pouch type battery cells 121_2, 121_4, 121_6, 121_8, 121_10, 121_12, 121_14, 121_16, 121_18, and 121_20.

The first bus bar frame 124F may further support the first and second bus bars 123P and 123N. The first bus bar 123P may be coupled to the positive electrode lead 121P of the pouch type battery cell 121_1. The first bus bar 123P may be welded to the positive electrode lead 121P of the pouch type battery cell 121_1. The second bus bar 123N may be coupled to the negative electrode lead 121N of the pouch type battery cell 121_20. The second bus bar 123N may be welded to the negative electrode lead 121N of the pouch type battery cell 121_20. Accordingly, a voltage of the cell stack CS may be output through the first and second bus bars 123P and 123N.

The first integrated circuit 125F is mounted on the first bus bar frame 124F. The first bus bar frame 124F may include a first groove for accommodation of the first integrated circuit 125F. As a non-limiting example, the first integrated circuit 125F may be implemented based on a flexible printed circuit board. The first integrated circuit 125F may include a plurality of first sensing plates 125FC for sensing potentials of the positive electrode lead 121P of each of the odd-numbered pouch type battery cells 121_1, 121_3, 121_5, 121_7, 121_9, 121_11, 121_13, 121_15, 121_17, and 121_19 and the negative electrode lead 121N of each of the even-numbered pouch type battery cells 121_2, 121_4, 121_6, 121_8, 121_10, 121_12, 121_14, 121_16, 121_18, and 121_20. Each of the plurality of first sensing plates 125FC may be shorted with the positive electrode lead 121P of corresponding one of the odd-numbered pouch type battery cells 121_1, 121_3, 121_5, 121_7, 121_9, 121_11, 121_13, 121_15, 121_17, and 121_19 and the negative electrode lead 121N of corresponding one of the even-numbered pouch type battery cells 121_2, 121_4, 121_6, 121_8, 121_10, 121_12, 121_14, 121_16, 121_18, and 121_20.

Each of the plurality of first sensing plates 125FC may be welded to the positive electrode lead 121P of corresponding one of the odd-numbered pouch type battery cells 121_1, 121_3, 121_5, 121_7, 121_9, 121_11, 121_13, 121_15, 121_17, and 121_19 and the negative electrode lead 121N of corresponding one of the even-numbered pouch type battery cells 121_2, 121_4, 121_6, 121_8, 121_10, 121_12, 121_14, 121_16, 121_18, and 121_20 by, for example, ultrasonic welding or the like. Thus, a voltage of the positive electrode lead 121P of each of the odd-numbered pouch type battery cells 121_1, 121_3, 121_5, 121_7, 121_9, 121_11, 121_13, 121_15, 121_17, and 121_19, and a voltage of the negative electrode lead 121N of each of the even-numbered pouch type battery cells 121_2, 121_4, 121_6, 121_8, 121_10, 121_12, 121_14, 121_16, 121_18, and 121_20 may be output through the first integrated circuit 125F.

FIG. 3 illustrates that each of the plurality of first sensing plates 125FC is interposed between the first bus bar frame 124F, and the positive electrode lead 121P of corresponding one of the odd-numbered pouch type battery cells 121_1, 121_3, 121_5, 121_7, 121_9, 121_11, 121_13, 121_15, 121_17, and 121_19 and the negative electrode lead 121N of corresponding one of the even-numbered pouch type battery cells 121_2, 121_4, 121_6, 121_8, 121_10, 121_12, 121_14, 121_16, 121_18, and 121_20, but embodiments are not limited thereto.

Each of the plurality of first sensing plates 125FC may be spaced apart from the first bus bar frame 124F with the positive electrode lead 121P of corresponding one of the odd-numbered pouch type battery cells 121_1, 121_3, 121_5, 121_7, 121_9, 121_11, 121_13, 121_15, 121_17, and 121_19 and the negative electrode lead 121N of corresponding one of the even-numbered pouch type battery cells 121_2, 121_4, 121_6, 121_8, 121_10, 121_12, 121_14, 121_16, 121_18, and 121_20 therebetween.

The second integrated circuit 125R is mounted on the second bus bar frame 124R. The second bus bar frame 124R may include a second groove for accommodation of the second integrated circuit 125R. As a non-limiting example, the second integrated circuit 125R may be implemented based on a flexible printed circuit board. The second integrated circuit 125R may include a plurality of second sensing plates 125RC for sensing potentials of the negative electrode lead 121N of each of the odd-numbered pouch type battery cells 121_1, 121_3, 121_5, 121_7, 121_9, 121_11, 121_13, 121_15, 121_17, and 121_19 and the positive electrode lead 121P of each of the even-numbered pouch type battery cells 121_2, 121_4, 121_6, 121_8, 121_10, 121_12, 121_14, 121_16, 121_18, and 121_20. Each of the plurality of second sensing plates 125RC may be shorted with the negative electrode lead 121N of corresponding one of the odd-numbered pouch type battery cells 121_1, 121_3, 121_5, 121_7, 121_9, 121_11, 121_13, 121_15, 121_17, and 121_19 and the positive electrode lead 121P of corresponding one of the even-numbered pouch type battery cells 121_2, 121_4, 121_6, 121_8, 121_10, 121_12, 121_14, 121_16, 121_18, and 121_20.

Each of the plurality of second sensing plates 125RC may be welded to the negative electrode lead 121N of corresponding one of the odd-numbered pouch type battery cells 121_1, 121_3, 121_5, 121_7, 121_9, 121_11, 121_13, 121_15, 121_17, and 121_19 and the positive electrode lead 121P of corresponding one of the even-numbered pouch type battery cells 121_2, 121_4, 121_6, 121_8, 121_10, 121_12, 121_14, 121_16, 121_18, and 121_20 by, for example, ultrasonic welding or the like. Thus, a voltage of the negative electrode lead 121N of each of the odd-numbered pouch type battery cells 121_1, 121_3, 121_5, 121_7, 121_9, 121_11, 121_13, 121_15, 121_17, and 121_19, and a voltage of the positive electrode lead 121P of each of the even-numbered pouch type battery cells 121_2, 121_4, 121_6, 121_8, 121_10, 121_12, 121_14, 121_16, 121_18, and 121_20 may be output through the second integrated circuit 125R.

FIG. 3 illustrates that each of the plurality of second sensing plates 125RC is interposed between the second bus bar frame 124R, and the negative electrode lead 121N of corresponding one of the odd-numbered pouch type battery cells 121_1, 121_3, 121_5, 121_7, 121_9, 121_11, 121_13, 121_15, 121_17, and 121_19 and the positive electrode lead 121P of corresponding one of the even-numbered pouch type battery cells 121_2, 121_4, 121_6, 121_8, 121_10, 121_12, 121_14, 121_16, 121_18, and 121_20, but embodiments are not limited thereto.

Each of the plurality of second sensing plates 125RC may be spaced apart from the second bus bar frame 124R with the negative electrode lead 121N of corresponding one of the odd-numbered pouch type battery cells 121_1, 121_3, 121_5, 121_7, 121_9, 121_11, 121_13, 121_15, 121_17, and 121_19 and the positive electrode lead 121P of corresponding one of the even-numbered pouch type battery cells 121_2, 121_4, 121_6, 121_8, 121_10, 121_12, 121_14, 121_16, 121_18, and 121_20 therebetween.

The lead cover assembly 127F includes a lead cover frame 127FF, a third integrated circuit 127FIC, and may include an integrated circuit cover 127FC. The lead cover frame 127FF is coupled to the first bus bar frame 124F. The lead cover frame 127FF may be fixed to the first bus bar frame 124F by, for example, thermal fusion or interference fit. The lead cover frame 127FF may cover the positive electrode lead 121P of each of the odd-numbered pouch type battery cells 121_1, 121_3, 121_5, 121_7, 121_9, 121_11, 121_13, 121_15, 121_17, and 121_19 and the negative electrode lead 121N of each of the even-numbered pouch type battery cells 121_2, 121_4, 121_6, 121_8, 121_10, 121_12, 121_14, 121_16, 121_18, and 121_20.

The third integrated circuit 127FIC is mounted on the lead cover frame 127FF. The lead cover frame 127FF may include a third groove for accommodation of the third integrated circuit 127FIC. The third integrated circuit 127FIC may be fixed to the lead cover frame 127FF by, for example, thermal fusion or the like.

The integrated circuit cover 127FC may be coupled to the lead cover frame 127FF. The integrated circuit cover 127FC may cover the third integrated circuit 127FIC. The integrated circuit cover 127FC and the lead cover frame 127FF may be configured to protect the third integrated circuit 127FIC. The integrated circuit cover 127FC and the lead cover frame 127FF may include an insulating material.

According to example embodiments, because the third integrated circuit 127FIC is mounted on the lead cover assembly 127F, damage to the third integrated circuit 127FIC may be prevented during welding of the positive electrode lead 121P, the negative electrode lead 121N, the first sensing plates 125FC, and the second sensing plates 125RC of each of the plurality of battery cells 121_1 to 121_20. Furthermore, even when the third integrated circuit 127FIC is defective, only one of the third integrated circuit 127FIC or the lead cover assembly 127F may be replaced, thus preventing scrapping of the entire battery cell assembly 120. Accordingly, the productivity and yield of a secondary battery may increase.

According to example embodiments, the third integrated circuit 127FIC may include a cell management controller (CMC). The third integrated circuit 127FIC may be configured to monitor and balance the plurality of pouch type battery cells 121_1 to 121_20.

The monitoring of the plurality of pouch type battery cells 121_1 to 121_20 may include measuring voltages and currents of certain inner nodes and measuring temperatures of preset positions in the cell stack CS. The third integrated circuit 127FIC may include a temperature sensor or be electrically connected to a temperature sensor adjacent to the cell stack CS.

The balancing of the plurality of pouch type battery cells 121_1 to 121_20 is an operation of reducing a deviation between the plurality of pouch type battery cells 121_1 to 121_20. The cell stack CS may operate under optimal conditions through the monitoring and balancing of the plurality of pouch type battery cells 121_1 to 121_20, thereby preventing a reduction of the lifespan of each of the plurality of pouch type battery cells 121_1 to 121_20.

The lead cover 127R is coupled to the second bus bar frame 124R. The lead cover 127R may be fixed to the second bus bar frame 124R by, for example, thermal fusion or interference fit. The lead cover 127R may cover the negative electrode lead 121N of each of the odd-numbered pouch type battery cells 121_1, 121_3, 121_5, 121_7, 121_9, 121_11, 121_13, 121_15, 121_17, and 121_19 and the positive electrode lead 121P of each of the even-numbered pouch type battery cells 121_2, 121_4, 121_6, 121_8, 121_10, 121_12, 121_14, 121_16, 121_18, and 121_20. The lead cover 127R may include an insulating material.

The first connection cable 126F may connect the first integrated circuit 125F and the third integrated circuit 127FIC. The first connection cable 126F may be connected to each of the first integrated circuit 125F and the third integrated circuit 127FIC. The first connection cable 126F may be connected directly to each of the first integrated circuit 125F and the third integrated circuit 127FIC. The first connection cable 126F may be connected to the third integrated circuit 127FIC through a first slit 127S1 of the lead cover frame 127FF. Voltages sensed by the first integrated circuit 125F may be transmitted to the third integrated circuit 127FIC through the first connection cable 126F.

The second connection cable 126R may connect the second integrated circuit 125R to the third integrated circuit 127FIC. The second connection cable 126R may be connected to each of the second integrated circuit 125R to the third integrated circuit 127FIC. The second connection cable 126R may be connected directly to each of the second integrated circuit 125R to the third integrated circuit 127FIC. The second connection cable 126R may be connected to the third integrated circuit 127FIC through a second slit 127S2 of the lead cover frame 127FF. Voltages sensed by the second integrated circuit 125R may be transmitted to the third integrated circuit 127FIC through the second connection cable 126R.

### (Second Embodiment)

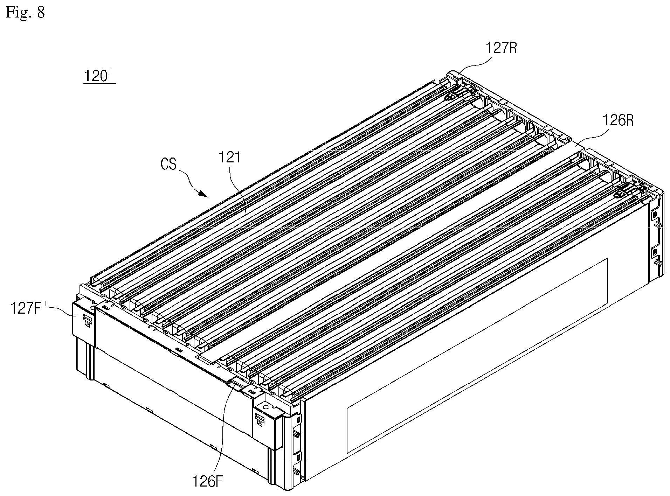

FIG. 8 is a perspective view of a battery cell assembly according to example embodiments.

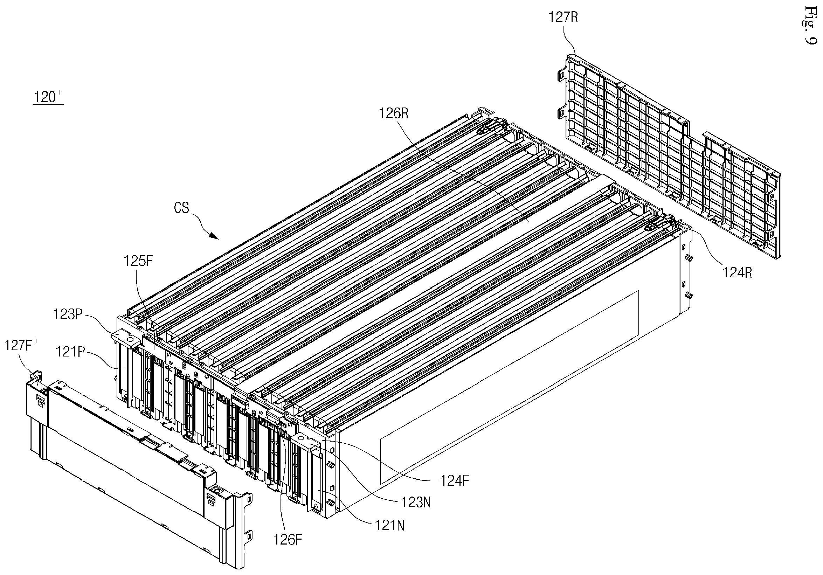

FIG. 9 is an exploded perspective view of a battery cell assembly.

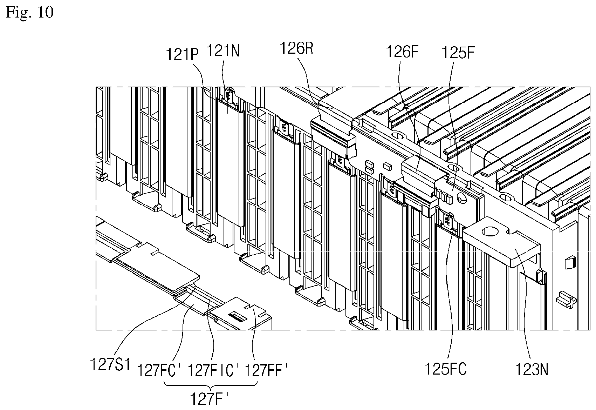

FIG. 10 is an enlarged partial perspective view of a part of FIG. 9.

Referring to FIGS. 8 to 10, a battery cell assembly 120' may include a cell stack CS, first and second bus bars 123P and 123N, a first bus bar frame 124F, a second bus bar frame 124R, a first integrated circuit 125F, a second integrated circuit 125R, a first connection cable 126F, a second connection cable 126R, a lead cover assembly 127F', and a lead cover 127R.

The cell stack CS, the first and second bus bars 123P and 123N, the first bus bar frame 124F, the second bus bar frame 124R, the first integrated circuit 125F, the second integrated circuit 125R, the first connection cable 126F, the second connection cable 126R, and the lead cover 127R are substantially the same as those described above with reference to FIGS. 1 to 7, and thus a redundant description thereto is omitted here.

According to example embodiments, the second connection cable 126R may connect the second integrated circuit 125R and the first integrated circuit 125F. The second connection cable 126R may be connected to each of the second integrated circuit 125R and the first integrated circuit 125F. The second connection cable 126R may be connected directly to each of the second integrated circuit 125R and the first integrated circuit 125F. The second connection cable 126R may be connected to the first integrated circuit 125F through a second slit 127S2 of the lead cover frame 127FF. Voltages sensed by the second integrated circuit 125R may be transmitted to the first integrated circuit 127F through the second connection cable 126R.

The lead cover assembly 127F' may include a lead cover frame 127FF', a third integrated circuit 127FIC', and an integrated circuit cover 127FC'. The lead cover frame 127FF' and the integrated circuit cover 127FC' include the first slit 127S1, and are substantially the same as the lead cover frame 127FF (see FIG. 3) and the integrated circuit cover 127FC (see FIG. 3) except that the second slit 127S2 (see FIG. 3) is not provided (i.e., only the first slit 127S1 is provided).

The first connection cable 126F may connect the first integrated circuit 125F and the third integrated circuit 127FIC'. The first connection cable 126F may be connected to each of the first integrated circuit 125F and the third integrated circuit 127FIC'. The first connection cable 126F may be connected directly to each of the first integrated circuit 125F and the third integrated circuit 127FIC'. The first connection cable 126F may be connected to the third integrated circuit 127FIC' through the first slit 127S1 of the lead cover frame 127FF. Voltages sensed by the first integrated circuit 125F and voltages sensed by the second integrated circuit 125R may be transmitted to the third integrated circuit 127FIC' through the first connection cable 126F.

According to example embodiments, the third integrated circuit 127FIC' may include a CMC and be configured to monitor and balance a plurality of pouch type battery cells 121.

The present invention has been described above in more detail with reference to the drawings, the embodiments, etc. However, the configurations illustrated in the drawings or embodiments described in the present specification are only embodiments of the present invention.

## Claims

1. A battery cell assembly (120) comprising:
a cell stack (CS) including a plurality of first pouch type battery cells (121) and a plurality of second pouch type battery cells (121) stacked in one stacking direction,
wherein each of the plurality of first pouch type battery cells includes a first positive electrode lead (121P) and a first negative electrode lead (121N), and
wherein each of the plurality of second pouch type battery cells includes a second positive electrode lead (121P) and a second negative electrode lead (121N);
a first bus bar frame (124F) coupled to the cell stack (CS);
a first integrated circuit (125F) on the first bus bar frame (124F);
a second bus bar frame (124R) coupled to the cell stack (CS); and
a second integrated circuit (125R) on the second bus bar frame (124R);
a lead cover (127R) extending in the stacking direction and coupled to the second bus bar frame (124R); and
a lead cover assembly (127F) extending in the stacking direction and coupled to the first bus bar frame (124F),
wherein the lead cover assembly (127F) comprises:
a lead cover frame (127FF) coupled to the first bus bar frame (124F); and
a third integrated circuit (127FIC) on the lead cover frame (127FF).

2. The battery cell assembly (120) of claim 1, wherein the first integrated circuit (125F) is configured to sense a potential of the first positive electrode lead (121P) of each of the plurality of first pouch type battery cells and a potential of the second negative electrode lead (121N) of each of the plurality of second pouch type battery cells.

3. The battery cell assembly (120) of claim 2, wherein the first integrated circuit (125F) comprises a plurality of first sensing plates (125FC) shorted with the first positive electrode lead (121P) of each of the plurality of first pouch type battery cells and the second negative electrode lead (121N) of each of the plurality of second pouch type battery cells.

4. The battery cell assembly (120) of claim 1, wherein the second integrated circuit (125R) is configured to sense a potential of the first negative electrode lead (121N) of each of the plurality of first pouch type battery cells and a potential of the second positive electrode lead (121P) of each of the plurality of second pouch type battery cells.

5. The battery cell assembly (120) of claim 4, wherein the second integrated circuit comprises a plurality of second sensing plates (125RC) shorted with the first negative electrode lead (121N) of each of the plurality of first pouch type battery cells and the second positive electrode lead (121P) of each of the plurality of second pouch type battery cells.

6. The battery cell assembly (120) of claim 1, wherein the third integrated circuit (127FIC) comprises a cell management controller (CMC).

7. The battery cell assembly (120) of claim 1, wherein the lead cover assembly (127F) comprises an integrated circuit cover (127FC) coupled to the lead cover frame (127FF) coupled to the first bus bar frame (124F) and configured to cover the third integrated circuit (127FIC).

8. The battery cell assembly (120) of claim 1, further comprising a first connection cable (126F) connected to each of the first integrated circuit (125F) and the third integrated circuit (127FIC).

9. The battery cell assembly (120) of claim 8, wherein the lead cover frame (127FF) comprises a first slit (127S1), and
the first connection cable (126F) is connected to the third integrated circuit (127FIC) through the first slit (127S1).

10. The battery cell assembly (120) of claim 1, further comprising a second connection cable (126R) connected to each of the second integrated circuit (125R) and the third integrated circuit (127FIC).

11. The battery cell assembly (120) of claim 10, wherein the lead cover frame (127FF) comprises a second slit (127S2), and
the second connection cable (126R) is connected to the third integrated circuit (127FIC) through the second slit (127S2).

12. The battery cell assembly (120) of claim 1, further comprising a first connection cable (126F) connected to each of the first integrated circuit (125F) and the second integrated circuit (125R).

13. The battery cell assembly (120) of claim 1, further comprising a second connection cable (126R) connected to each of the first integrated circuit (125F) and the third integrated circuit (127FIC).

## Patentansprüche

1. Batteriezellenanordnung (120), umfassend:
einen Zellstapel (CS), der eine Vielzahl von ersten Pouch-Batteriezellen (121) und eine Vielzahl von zweiten Pouch-Batteriezellen (121) enthält, die in einer Stapelrichtung gestapelt sind,
wobei jede der Vielzahl von ersten Pouch-Batteriezellen eine erste positive Elektrodenleitung (121P) und eine erste negative Elektrodenleitung (121N) aufweist, und
wobei jede der Vielzahl von zweiten Pouch-Batteriezellen eine zweite positive Elektrodenleitung (121P) und eine zweite negative Elektrodenleitung (121N) aufweist;
einen ersten Sammelschienenrahmen (124F), der mit dem Zellstapel (CS) gekoppelt ist;
eine erste integrierte Schaltung (125F) auf dem ersten Sammelschienenrahmen (124F);
einen zweiten Sammelschienenrahmen (124R), der mit dem Zellstapel (CS) gekoppelt ist; und
eine zweite integrierte Schaltung (125R) auf dem zweiten Sammelschienenrahmen (124R);
eine Leitungsabdeckung (127R), die sich in der Stapelrichtung erstreckt und mit dem zweiten Sammelschienenrahmen (124R) gekoppelt ist; und
eine Leitungsabdeckungsbaugruppe (127F), die sich in der Stapelrichtung erstreckt und mit dem ersten Sammelschienenrahmen (124F) gekoppelt ist,
wobei die Leitungsabdeckungsbaugruppe (127F) umfasst:
einen Leitungsabdeckungsrahmen (127FF), der mit dem ersten Sammelschienenrahmen (124F) gekoppelt ist; und
eine dritte integrierte Schaltung (127FIC) auf dem
Leitungsabdeckungsrahmen (127FF).

2. Batteriezellenanordnung (120) nach Anspruch 1, wobei die erste integrierte Schaltung (125F) dazu konfiguriert ist, ein Potenzial der ersten positiven Elektrodenleitung (121P) von jeder der Vielzahl von ersten Pouch-Batteriezellen und ein Potenzial der zweiten negativen Elektrodenleitung (121N) von jeder der Vielzahl von zweiten Pouch-Batteriezellen zu erfassen.

3. Batteriezellenanordnung (120) nach Anspruch 2, wobei die erste integrierte Schaltung (125F) eine Vielzahl von ersten Erfassungsplatten (125FC) umfasst, die mit der ersten positiven Elektrodenleitung (121P) von jeder der Vielzahl von ersten Pouch-Batteriezellen und der zweiten negativen Elektrodenleitung (121N) von jeder der Vielzahl von zweiten Pouch-Batteriezellen kurzgeschlossen sind.

4. Batteriezellenanordnung (120) nach Anspruch 1, wobei die zweite integrierte Schaltung (125R) dazu konfiguriert ist, ein Potenzial der ersten negativen Elektrodenleitung (121N) von jeder der Vielzahl von ersten Pouch-Batteriezellen und ein Potenzial der zweiten positiven Elektrodenleitung (121P) von jeder der Vielzahl von zweiten Pouch-Batteriezellen zu erfassen.

5. Batteriezellenanordnung (120) nach Anspruch 4, wobei die zweite integrierte Schaltung (125R) eine Vielzahl von zweiten Erfassungsplatten (125RC) umfasst, die mit der ersten negativen Elektrodenleitung (121N) von jeder der Vielzahl von ersten Pouch-Batteriezellen und der zweiten positiven Elektrodenleitung (121P) von jeder der Vielzahl von zweiten Pouch-Batteriezellen kurzgeschlossen sind.

6. Batteriezellenanordnung (120) nach Anspruch 1, wobei die dritte integrierte Schaltung (127FIC) eine Zellmanagement-Steuerung (CMC) umfasst.

7. Batteriezellenanordnung (120) nach Anspruch 1, wobei die Leitungsabdeckungsbaugruppe (127F) eine Abdeckung der integrierten Schaltung (127FC) umfasst, die mit dem Leitungsabdeckungsrahmen (127FF) gekoppelt ist, der mit dem ersten Sammelschienenrahmen (124F) gekoppelt ist und dazu konfiguriert ist, die dritte integrierte Schaltung (127FIC) abzudecken.

8. Batteriezellenanordnung (120) nach Anspruch 1, ferner umfassend ein erstes Verbindungskabel (126F), das sowohl mit der ersten integrierten Schaltung (125F) als auch mit der dritten integrierten Schaltung (127FIC) verbunden ist.

9. Batteriezellenanordnung (120) nach Anspruch 8, wobei der Leitungsabdeckungsrahmen (127FF) einen ersten Schlitz (127S1) aufweist, und das erste Verbindungskabel (126F) mit der dritten integrierten Schaltung (127FIC) durch den ersten Schlitz (127S1) hindurch verbunden ist.

10. Batteriezellenanordnung (120) nach Anspruch 1, ferner umfassend ein zweites Verbindungskabel (126R), das sowohl mit der zweiten integrierten Schaltung (125R) als auch mit der dritten integrierten Schaltung (127FIC) verbunden ist.

11. Batteriezellenanordnung (120) nach Anspruch 10, wobei der Leitungsabdeckungsrahmen (127FF) einen zweiten Schlitz (127S2) aufweist, und das zweite Verbindungskabel (126R) mit der dritten integrierten Schaltung (127FIC) durch den zweiten Schlitz (127S2) hindurch verbunden ist.

12. Batteriezellenanordnung (120) nach Anspruch 1, ferner umfassend ein erstes Verbindungskabel (126F), das sowohl mit der ersten integrierten Schaltung (125F) als auch mit der zweiten integrierten Schaltung (125R) verbunden ist.

13. Batteriezellenanordnung (120) nach Anspruch 1, ferner umfassend ein zweites Verbindungskabel (126R), das sowohl mit der ersten integrierten Schaltung (125F) als auch mit der dritten integrierten Schaltung (127FIC) verbunden ist.

## Revendications

1. Ensemble d'éléments de batterie (120) comprenant :
un empilement d'éléments (CS) comprenant une pluralité de premiers éléments de batterie de type poche (121) et une pluralité de seconds éléments de batterie de type poche (121) empilés dans une direction d'empilement,
dans lequel chacun de la pluralité de premiers éléments de batterie de type poche comprend un premier conducteur d'électrode positive (121P) et un premier conducteur d'électrode négative (121N), et
dans lequel chacun de la pluralité de seconds éléments de batterie de type poche comprend un second conducteur d'électrode positive (121P) et un second conducteur d'électrode négative (121N) ;
un premier cadre de barre omnibus (124F) couplé à l'empilement d'éléments (CS) ;
un premier circuit intégré (125F) sur le premier cadre de barre omnibus (124F) ;
un second cadre de barre omnibus (124R) couplé à l'empilement d'éléments (CS) ; et
un second circuit intégré (125R) sur le second cadre de barre omnibus (124R) ;
un couvercle de conducteur (127R) s'étendant dans la direction d'empilement et couplé au second cadre de barre omnibus (124R) ; et
un ensemble couvercle de conducteur (127F) s'étendant dans la direction d'empilement et couplé au premier cadre de barre omnibus (124F),
dans lequel l'ensemble couvercle de conducteur (127F) comprend :
un cadre de couvercle de conducteur (127FF) couplé au premier cadre de barre omnibus (124F) ; et
un troisième circuit intégré (127FIC) sur le cadre de couvercle de conducteur (127FF).

2. Ensemble d'éléments de batterie (120) selon la revendication 1, dans lequel le premier circuit intégré (125F) est configuré pour détecter un potentiel du premier conducteur d'électrode positive (121P) de chacun de la pluralité de premiers éléments de batterie de type poche et un potentiel du second conducteur d'électrode négative (121N) de chacun de la pluralité de seconds éléments de batterie de type poche.

3. Ensemble d'éléments de batterie (120) selon la revendication 2, dans lequel le premier circuit intégré (125F) comprend une pluralité de premières plaques de détection (125FC) mises en court-circuit avec le premier conducteur d'électrode positive (121P) de chacun de la pluralité de premiers éléments de batterie de type poche et le second conducteur d'électrode négative (121N) de chacun de la pluralité de seconds éléments de batterie de type poche.

4. Ensemble d'éléments de batterie (120) selon la revendication 1, dans lequel le second circuit intégré (125R) est configuré pour détecter un potentiel du premier conducteur d'électrode négative (121N) de chacun de la pluralité de premiers éléments de batterie de type poche et un potentiel du second conducteur d'électrode positive (121P) de chacun de la pluralité de seconds éléments de batterie de type poche.

5. Ensemble d'éléments de batterie (120) selon la revendication 4, dans lequel le second circuit intégré (125R) comprend une pluralité de secondes plaques de détection (125RC) mises en court-circuit avec le premier conducteur d'électrode négative (121N) de chacun de la pluralité de premiers éléments de batterie de type poche et le second conducteur d'électrode positive (121P) de chacun de la pluralité de seconds éléments de batterie de type poche.

6. Ensemble d'éléments de batterie (120) selon la revendication 1, dans lequel le troisième circuit intégré (127FIC) comprend un contrôleur de gestion d'éléments (CMC).

7. Ensemble d'éléments de batterie (120) selon la revendication 1, dans lequel l'ensemble couvercle de conducteur (127F) comprend un couvercle de circuit intégré (127FC) couplé au cadre de couvercle de conducteur (127FF) couplé au premier cadre de barre omnibus (124F) et configuré pour recouvrir le troisième circuit intégré (127FIC).

8. Ensemble d'éléments de batterie (120) selon la revendication 1, comprenant en outre un premier câble de connexion (126F) connecté à chacun du premier circuit intégré (125F) et du troisième circuit intégré (127FIC).

9. Ensemble d'éléments de batterie (120) selon la revendication 8, dans lequel le cadre de couvercle de conducteur (127FF) comprend une première fente (127S1), et le premier câble de connexion (126F) est connecté au troisième circuit intégré (127FIC) à travers la première fente (127S1).

10. Ensemble d'éléments de batterie (120) selon la revendication 1, comprenant en outre un second câble de connexion (126R) connecté à chacun du second circuit intégré (125R) et du troisième circuit intégré (127FIC).

11. Ensemble d'éléments de batterie (120) selon la revendication 10, dans lequel le cadre de couvercle de conducteur (127FF) comprend une seconde fente (127S2), et le second câble de connexion (126R) est connecté au troisième circuit intégré (127FIC) à travers la seconde fente (127S2).

12. Ensemble d'éléments de batterie (120) selon la revendication 1, comprenant en outre un premier câble de connexion (126F) connecté à chacun du premier circuit intégré (125F) et du second circuit intégré (125R).

13. Ensemble d'éléments de batterie (120) selon la revendication 1, comprenant en outre un second câble de connexion (126R) connecté à chacun du premier circuit intégré (125F) et du troisième circuit intégré (127FIC).
